# EUROPEAN PATENT APPLICATION

(11) **EP 4 553 480 A1**
(43) Date of publication of application: **14.05.2025**
(21) Application number: 23208817.9
(22) Date of filing: 09.11.2023
(51) Int. Cl.: G01N 1/22, G01N 15/06

(54) **ASSEMBLY AND METHOD FOR TESTING A CABIN AIR QUALITY COMPONENT OF A VEHICLE**

(71) Applicant: Volvo Car Corporation, 405 31 Göteborg (SE)
(72) Inventor: SEBASTIAN, Aleksandra, 40531 Göteborg (SE); LÖFVENDAHL, Anders, 40531 Göteborg (SE); MILLBERG, Adam, 40531 Göteborg (SE)
(74) Representative: Maiwald GmbH

(57) **Abstract**

The disclosure relates to an assembly (10) for testing a cabin air quality component (12) of a vehicle. The assembly (10) comprises a first chamber (16) fluidically connectable to an air inlet (14a) of the cabin air quality component (12). The first chamber (16) comprises a first inlet (20) configured to receive a carrier substance and a second inlet (22). A test substance provider (24) is fluidically connected to the second inlet (22). Moreover, the assembly (10) comprises a mixing device (28) arranged inside the first chamber (16). The assembly (10) further comprises a second chamber (18) fluidically connectable to an air outlet (14b) of the cabin air quality component (12) and comprising a reception space configured for accommodating at least a portion of the cabin air quality component (12). The second chamber (18) comprises an outlet (32) configured to dispense at least the carrier substance. The assembly (10) also comprises a first detector (34) arranged inside the second chamber (18) and configured to detect the test substance. Furthermore, the disclosure relates to a method for testing a cabin air quality component (12) of a vehicle.

## Description

### TECHNICAL FIELD

The present disclosure relates to an assembly for testing a cabin air quality component of a vehicle.

Moreover, the present disclosure is directed to a method for testing a cabin air quality component of a vehicle.

### BACKGROUND ART

Air quality inside a passenger cabin of a vehicle is an important aspect for users of a vehicle. Especially in cases in which the vehicle is used in potentially or effectively polluted environments, such as in big cities, the air quality inside the passenger cabin should be improved with respect to the environment, e.g. by being purified. This may be done using one or more cabin air quality components.

Thus, during development of cabin air quality components, i.e. components of the vehicle at least contributing to influencing the air quality inside the passenger cabin, one has to make sure that the cabin air quality components are able to provide the required functionality and performance. To this end, cabin air quality components usually undergo an extensive test program which includes test drives in different environments.

### SUMMARY

It is an objective of the present disclosure to facilitate testing of cabin air quality components. At the same time the meaningfulness of the tests shall not be compromised.

The problem is at least partially solved or alleviated by the subject matter of the independent claims of the present disclosure, wherein further examples are incorporated in the dependent claims.

According to a first aspect, there is provided an assembly for testing a cabin air quality component of a vehicle. The assembly comprises a first chamber fluidically connectable to an air inlet of the cabin air quality component. The first chamber comprises a first inlet configured to receive a carrier substance and a second inlet, wherein a test substance provider is fluidically connected to the second inlet. Additionally, the assembly comprises a mixing device arranged inside the first chamber. Moreover, the assembly comprises a second chamber fluidically connectable to an air outlet of the cabin air quality component and comprising a reception space configured for accommodating at least a portion of the cabin air quality component. The second chamber comprises an outlet configured to dispense at least the carrier substance. The assembly also comprises a first detector associated with the second chamber and configured to detect the test substance. Such an assembly allows to test the cabin air quality component in a condition in which it is not installed in the associated vehicle. In other words, the cabin air quality component may be tested without needing a vehicle. Such a test may be executed in a workshop, garage or test chamber. As has been mentioned before, a cabin air quality component is to be understood as a part or an assembly of parts configured to at least contribute to modifying the quality of cabin air in at least one aspect. Examples of cabin air quality components include filters, other purifying devices such as so-called advanced air cleaners, entire heating, ventilation and air conditioning systems (HVAC systems), particle sensors and gas sensors. In this context, the test substance provider is configured to provide an amount of a test substance which is provided at the second inlet of the first chamber. The test substance may be a pollutant or any other substance on which the cabin air quality component under test shall have an effect. The test substance for example comprises a gas such as carbon monoxide (CO), sulfur dioxide (SO2) or nitrogen oxide (NOx). Additionally or alternatively, the test substance comprises a plurality of particles. The carrier substance may be ambient air or any other substance used for diluting the test substance. Additionally, using such an assembly, the test substance may be provided to the cabin air quality component under test in a repetitive and systematic manner. This is independent from an environmental condition such as an environmental pollution or weather conditions. In the context of the present assembly, the first chamber not only fulfills the functionality to reliably provide the test substance and the carrier substance to the cabin air quality component under test, but also allows to reliably mix the test substance and the carrier substance. For this reason, the first chamber may as well be called an inlet chamber and/or a mixing chamber. Reliably mixing the carrier substance and the test substance allows to subject the cabin air quality component under test to a uniform inflow. Additionally, an assembly according to the present disclosure is structurally simple and relatively compact.

In the context of the present disclosure, it is understood that the chambers are gas-tight except for the mentioned inlets and outlets.

The fact that the first detector is associated with the second chamber means that the first detector is configured and/or arranged such that a detection result provided by the first detector describes a characteristic of a content of the second chamber. The first detector may be associated with the second chamber in that at least a portion of the first detector is arranged inside the second chamber. In a case in which the first detector comprises a probe head, at least the probe head may be arranged inside the second chamber.

According to an example, the second chamber is configured to accommodate the cabin air quality component in its entirety. This means that, during use of the assembly, the cabin air quality component is arranged inside the second chamber.

According to an example, the assembly further comprises a second detector associated with the first chamber and configured to detect the test substance. Using a second detector, a performance of the cabin air quality component may be evaluated by calculating a difference between detecting results provided by the first detector and detecting results provided by the second detector. Consequently, the performance of the cabin quality component may be evaluated in a very precise manner.

The fact that the second detector is associated with the first chamber means that the second detector is configured and/or arranged such that a detection result provided by the second detector describes a characteristic of a content of the first chamber. The second detector may be associated with the first chamber in that at least a portion of the second detector is arranged inside the first chamber. In a case in which the second detector comprises a probe head, at least the probe head may be arranged inside the first chamber.

It is noted that in a case in which the assembly only comprises a first detector, a quantity of test substance provided by the test substance provider may be known. In this case, a performance of the cabin air quality component may be evaluated by calculating a difference between the detecting results of the first detector and the known quantity of test substance. It is understood that a known quantity may be an absolute quantity or a quantity defined by a mass flow or a volume flow of the test substance.

In an example, a length of the first chamber extending along a flow direction exceeds a biggest diameter of the first chamber, wherein the diameter is measured transverse to the flow direction. The flow direction may extend from the first inlet towards the outlet of the first chamber. Such a first chamber allows to reliably mix the carrier substance and the test substance. Consequently, a highly uniform inflow may be guaranteed for the cabin air quality component under test. According to an example, the length of the first chamber corresponds to at least two times the biggest diameter. According to a further example, the length of the first chamber corresponds to at least three times the biggest diameter. Having a comparatively long first chamber allows to further increase the uniformity of the inflow.

In an example, the first chamber is tube-shaped. In this case, the flow direction may be defined by a middle axis of the first chamber. In this context, tube-shaped means that the length extending along the flow direction is very large as compared to the diameter. This allows to mix the carrier substance and the test substance with particular reliability.

According to an example, the assembly further comprises an adaptor piece fluidically connected to the first chamber, such that the first chamber is fluidically connectable to the air inlet of the cabin air quality component via the adaptor piece. The adaptor piece allows to reliably connect the first chamber to the air inlet of the cabin air quality component. To this end, the adaptor piece may comprise a first connection interface connectable to the first chamber and a second connection interface connectable to the air inlet of the cabin air quality component. The first connection interface and the second connection interface may differ with respect to their form and/or size. Thus, the connection piece allows to connect the first chamber to a cabin air quality component, wherein an air inlet of the cabin air quality component is of a different shape and/or size than an associated outlet of the first chamber.

According to an example, the adaptor piece is funnel-shaped.

In an example, the mixing device is located at an end of the first chamber adjacent to the adaptor piece and/or at an end of the adaptor piece adjacent to the first chamber. At such a position, the mixing device further enhances the uniformity of the inflow to the cabin air quality component by mixing of the carrier substance and the test substance.

According to an example, the mixing device comprises an active mixing device such as a fan or blower. Additionally or alternatively, the mixing device comprises a passive mixing device such as a chicanery. Both alternatives allow to reliably mix the test substance and the carrier substance.

According to an example, the test substance provider comprises a particle generator and/or a gas supply. Using a particle generator, particles with certain physical and chemical properties may be generated and used for testing the cabin air quality component. The particle generator may comprise an aerosol generator. Additionally or alternatively, the particle generator may comprise a soot generator. The gas supply may be configured to provide noxious gases such as nitrogen dioxide (NO2), carbon monoxide (CO), sulfur dioxide (SO2), ozone (O3), carbon dioxide (CO2), or volatile organic compounds (VOCs). The gas supply may be realized by a gas bottle containing the relevant gas. Thus, the cabin air quality component may be tested with respect to test substances that are relevant during use of the vehicle.

According to an example, the test substance provider comprises a plurality of particle generators. This means that two or more particle generators are used in order to generate particles forming part of the test substance. This offers the possibility to generate test substance mixtures being similar or identical to different environments in which the vehicle may be used, e.g. urban traffic environments.

According to another example, the test substance provider comprises a plurality of gas supplies. This means that two or more different gases may be supplied. This offers the possibility to generate test substance mixtures being similar or identical to different environments in which the vehicle may be used, e.g. urban traffic environments.

It is noted that the above examples may as well be combined, i.e. the test substance provider may comprise both a plurality of particle generators and a plurality of gas supplies.

In an example, the first detector comprises a gas sensor and/or a particle counter. A gas sensor is configured to detect an associated gas or a plurality of associated gases. Moreover, the gas sensor may be configured to quantify the detected gases. The particle counter is configured to provide an indication of an amount of particles. Optionally, the particle counter may be configured to indicate an amount of particles as a function of a particle diameter or another characteristic of the particle. In this context, the amount of particles may be indicated for a set of predefined intervals of particle diameters, e.g. from 10-14 nm, 15-37 nm etc. Consequently, a performance of the cabin air quality component under test may be evaluated with high precision.

It is noted that also the second detector may comprise a gas sensor and/or a particle counter. As before, a gas sensor is configured to detect an associated gas or a plurality of associated gases. Moreover, the gas sensor may be configured to quantify the detected gases. The particle counter is configured to provide an indication of an amount of particles. Optionally, the particle counter may be configured to indicate an amount of particles as a function of a particle diameter or another characteristic of the particle. Also in this context, the amount of particles may be indicated for a set of predefined intervals of particle diameters, e.g. from 10-14 nm, 15-37 nm etc. Consequently, a performance of the cabin air quality component under test may be evaluated with high precision.

According to a second aspect, there is provided a method for testing a cabin air quality component of a vehicle. The method comprises using an assembly according to the present disclosure. Furthermore, the method comprises
- providing a fluidic connection of an air inlet of the cabin air quality component and a first chamber,
- providing a fluidic connection of an air outlet of the cabin air quality component and a second chamber,
- providing at least a portion of the cabin air quality component in the second chamber,
- supplying a mixture comprising a carrier substance and a test substance at the air inlet of the cabin air quality component via the first chamber,
- detecting the test substance at a location associated with the air outlet of the cabin air quality component and within the second chamber.

This method allows to test the cabin air quality component in a workshop, garage or test chamber. A vehicle is not needed for executing the present method. As has been mentioned before, a cabin air quality component is to be understood as a part or an assembly of parts configured at least contribute to modifying the quality of cabin air in at least one aspect. Examples of cabin air quality components include filters, other purifying devices such as so-called advanced air cleaners, entire heating, ventilation and air conditioning systems (HVAC systems), particle sensors and gas sensors. The test substance provided to the air inlet of the vehicle may be a pollutant or any other substance on which the cabin air quality component under test shall have an effect. The test substance for example comprises a gas such as carbon monoxide (CO), sulfur dioxide (SO2) or nitrogen oxide (NOx). Additionally or alternatively, the test substance comprises a plurality of particles. The carrier substance may be ambient air or any other substance used for diluting the test substance. Additionally, using such a method, the test substance may be provided to the cabin air quality component under test in a repetitive and systematic manner. This is independent from an environmental condition such as an environmental pollution or weather conditions. In the context of the present method, the first chamber not only fulfills the functionality to reliably provide the test substance and the carrier substance to the cabin air quality component under test, but also allows to reliably mix the test substance and the carrier substance. For this reason, the first chamber may as well be called an inlet chamber and/or a mixing chamber. Reliably mixing the carrier substance and the test substance allows to subject the cabin air quality component under test to a uniform inflow.

In an example, the method according to the present disclosure is used in order to carry out a performance test of the cabin air quality component. This means that the objective of the test is to determine or verify a maximum impact the cabin air quality component can have on the test substance.

In another example, the method according to the present disclosure is used in order to carry out an aging test of the cabin air quality component. This means that the objective of the test is to evaluate performance variations over time, i.e. to determine whether and/or to which extent a performance of the cabin air quality component reduces over time.

According to an example, the method involves supplying the mixture at a volume flow of 50 to 80 liters per second. This corresponds to volume flows to which the air inlet of the cabin air quality component is subject while driving.

According to an example, the method further comprises detecting the test substance at a location associated with the air inlet of the cabin air quality component and within the first chamber. To this end, the second detector may be used. By detecting the test substance at a location associated with the air inlet of the cabin air quality component, a performance of the cabin air quality component may be evaluated by calculating a difference between detecting results associated with the air outlet and detecting results associated with the air inlet of the cabin air quality component. Consequently, the performance of the cabin quality component may be evaluated in a very precise manner.

According to an example, the method further comprises mixing the carrier substance and the test substance in the first chamber. In this context, the mixing may be passive or active. In case the mixing is active, the duct may comprise a fan or blower. This allows to provide a uniform inflow to the air inlet of the cabin air quality component.

In an example, the method is carried out in an environment having controllable temperature and controllable humidity. To this end, the assembly may be located in a workshop, in a garage or, more generally speaking, in a test chamber. In these examples, the workshop, garage or test chamber may comprise an air conditioning system configured to keep temperature and/or humidity constant, e.g. 22°C and 40% relative humidity (RH). According to a further example, the environment may comprise comparatively clean air. This may be defined by less than 1µg/m³ of particles having a diameter of 2.5 µm or smaller (PM2.5).

In an example, the test substance comprises at least one of a salt, a Di-Ethyl-Hexyl-Sebacat and soot. The salt may be Sodium Chloride (NaCl). Di-Ethyl-Hexyl-Sebacat often is abbreviated as DEHS. Salt, Di-Ethyl-Hexyl-Sebacat and soot are frequent pollutants. Thus, using a test substance comprising at least one of a salt, a Di-Ethyl-Hexyl-Sebacat and soot allows to test the cabin air quality component under realistic conditions. This has the effect that the test results are highly meaningful.

In an example, the mixture comprises a constant concentration of the test substance. In this context, the concentration may be constant while executing the method according to the present disclosure, i.e. constant over time. This allows to test the cabin air quality component in a systematic manner, thereby excluding undesired environmental factors. In case the test substance comprises particles, the concentration is for example 100µg/m³ of particles having a diameter of 2.5 µm or smaller (PM2.5).

In an example, detecting the test substance comprises determining a mass distribution associated with the test substance. The mass distribution may be determined as a function of a particle diameter. This means that for a plurality of particle diameters, a corresponding mass of particles is determined. In this context, the mass of particles may be determined as an absolute value. Alternatively, the mass of particles may be determined as a concentration, e.g. mass per volume. Additionally or alternatively, the amount of particles may be indicated for a set of predefined intervals of particle diameters, e.g. from 10-14 nm, 15-37 nm etc. In an example in which the test substance comprises different types of particles, a mass distribution may be determined for each type of particles. In all of the above examples, a performance of the cabin air quality component under test may be determined in a precise and meaningful manner.

In an example, detecting the test substance comprises determining a removal efficiency associated with the test substance. Also a removal efficiency may be determined as a function of a particle diameter. In this context, the removal efficiency may be indicated for a set of predefined intervals of particle diameters, e.g. from 10-14 nm, 15-37 nm etc. In case different types of particles are used, the removal efficiency may be determined for each type of particles. In this context, the removal efficiency describes a portion of particles that is removed from the inflow using the cabin air quality component under test. In all of the above examples, a performance of the cabin air quality component under test may be determined in a precise and meaningful manner.

It should be noted that the above examples may be combined with each other irrespective of the aspect involved. Accordingly, the method may be combined with structural features of the assembly and, likewise, the assembly may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an assembly according to a first example of the present disclosure for testing a cabin air quality component of a vehicle, wherein a method for testing a cabin air quality component of a vehicle is carried out using the assembly,
- Figure 2: shows an assembly according to a second example of the present disclosure for testing a cabin air quality component of a vehicle, wherein a method for testing a cabin air quality component of a vehicle is carried out using the assembly,
- Figure 3: shows an assembly according to a third example of the present disclosure for testing a cabin air quality component of a vehicle, wherein a method for testing a cabin air quality component of a vehicle is carried out using the assembly,
- Figure 4: shows an assembly according to a fourth example of the present disclosure for testing a cabin air quality component of a vehicle, wherein a method for testing a cabin air quality component of a vehicle is carried out using the assembly,
- Figure 5: shows an adaptor piece of the assembly of Figure 4,
- Figures 6 and 7: show example test results.

### DETAILED DESCRIPTION

The Figures are merely schematic representations and serve only to illustrate examples of the disclosure. Identical or equivalent elements are in principle provided with the same reference signs.

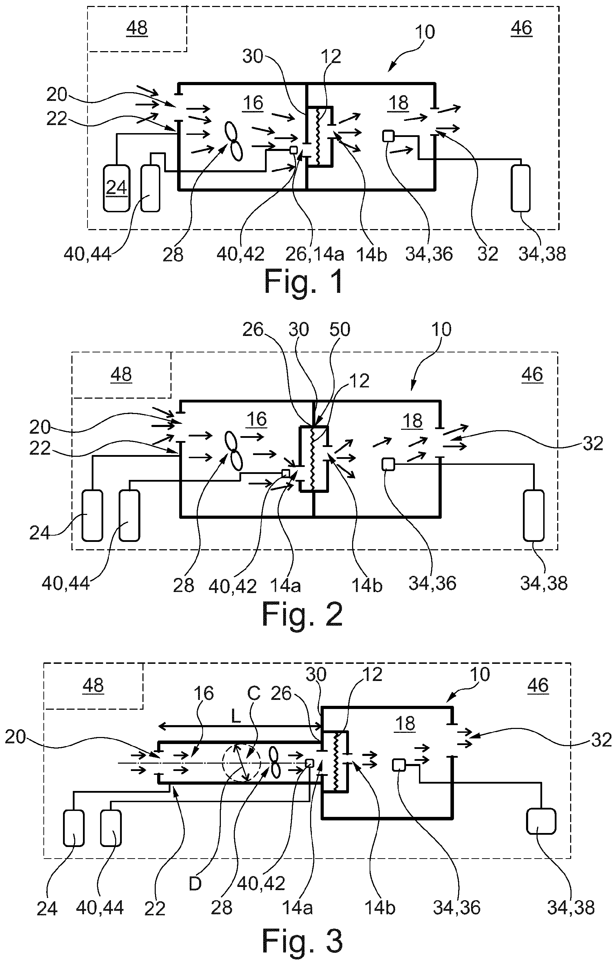

Figure 1 shows an assembly 10 for testing a cabin air quality component 12 of a vehicle.

In the present example, the cabin air quality component 12 is a filter unit of a heating, ventilation and air conditioning system of the vehicle.

The cabin air quality component 12 comprises an air inlet 14a and an air outlet 14b.

The assembly 10 comprises a first chamber 16 and a second chamber 18.

The first chamber 16 comprises a first inlet 20 configured to receive a carrier substance, in the present example ambient air.

Moreover, the first chamber 16 comprises a second inlet 22.

The assembly 10 additionally comprises a test substance provider 24 which is fluidically connected to the second inlet 22 using a hose. In the present example, the test substance provider 24 is a particle generator. More precisely, the particle generator is configured to generate soot particles having a diameter of 40 nm to 200 nm.

The flow of carrier substance and test substance through the assembly 10 is indicated by a plurality of arrows in Figure 1.

The first chamber 16 also comprises an outlet 26 which is fluidically connected to the air inlet 14a of the cabin air quality component 12.

Thus, using the first chamber 16, a mixture comprising the carrier substance and the test substance may be provided at the air inlet 14a of the cabin air quality component 12.

In order to enhance the uniformity of this mixture, the assembly 10 additionally comprises a mixing device 28 which is arranged inside the first chamber 16. In the present example the mixing device 28 is a fan.

The second chamber 18 is configured to receive the cabin air quality component 12 under test. In other words, the cabin air quality component 12 may be at least partially arranged inside the second chamber 18. In the example of Figure 1, the cabin air quality component 12 in its entirety is arranged inside the second chamber 18.

The cabin air quality component 12 is attached to a wall 30 of the second chamber 18. In the present example, this wall is a separation wall separating the first chamber 16 and the second chamber 18.

Moreover, the second chamber 18 is fluidically connected to the air outlet 14b of the cabin air quality component 12. In the present example this fluidic connection is realized in that the air outlet 14b is provided inside the second chamber 18.

Furthermore, the second chamber 18 comprises an outlet 32. The outlet 32 fluidically connects the interior of the second chamber 18 to an environment. More precisely, the outlet 32 is configured to dispense at least the carrier substance to the environment.

The assembly 10 additionally comprises a first detector 34 configured to detect the test substance. In the present example, the first detector 34 comprises a probe head 36 which is arranged inside the second chamber 18.

The first detector 34 additionally comprises a particle counter 38 fluidically connected to the probe head 36 via a hose. The particle counter 38 is arranged outside the second chamber 18 and outside the first chamber 16.

Furthermore, the system 10 comprises a second detector 40 configured to detect the test substance. In the present example, the second detector 40 comprises a probe head 42 which is arranged inside of the first chamber 16 adjacent to the air inlet 14a of the cabin air quality component 12.

The probe head 42 is arranged downstream with respect to the second inlet 22.

The second detector 40 additionally comprises a particle counter 44 fluidically connected to the probe head 42 via a hose. The particle counter 44 is arranged outside the first chamber 16 and outside the second chamber 18.

Using the assembly 10 for testing a cabin air quality component 12, a method for testing a cabin air quality component 12 may be carried out.

In the present example, the method is carried out in an environment having controllable temperature and controllable humidity. To this end, the assembly 10 is placed in a test chamber 46 being equipped with an air conditioning system 48.

The air conditioning system 48 is configured to keep a temperature within the test chamber 46 constant. Moreover, the air conditioning system 48 is configured to keep a relative humidity inside the test chamber 46 constant.

Furthermore, the air conditioning system 48 comprises a filter guaranteeing that less than 1µg/m³ of particles having a diameter of 2.5 µm or smaller (PM2.5) are present inside the test chamber 46.

In order to carry out the method, the cabin air quality component 12 is arranged inside the second chamber 18 and attached to the wall 30. Moreover, a fluidic connection of the air inlet 14a of the cabin air quality component 12 and the first chamber 16 is established. Consequently, the first chamber 16 and the air inlet 14a are fluidically connected.

Moreover, due to the arrangement of the cabin air quality component 12 inside the second chamber 18, a fluidic connection of the air outlet 14b of the cabin air quality component 12 and the second chamber 18 is provided.

Subsequently, a mixture comprising the carrier substance and the test substance is supplied at the air inlet 14a of the cabin air quality component 12 via the first chamber 16.

In this context, the test substance is provided inside the first chamber 16 via the second inlet 22 which is connected to the test substance provider 24.

The carrier substance is formed by the ambient air present inside the test chamber 46. This carrier substance enters the first chamber 16 via the first inlet 20 (cf. arrows in Figure 1).

The present method also comprises actively mixing the carrier substance at the test substance in the first chamber 16. To this end, the mixing device 28 is used, i.e. the fan is operated.

In the present example, a constant concentration of the test substance is provided using the test substance provider 24.

Furthermore, the test substance, in the present examples soot particles, is detected at a location associated with an air outlet 14b of the cabin air quality component 12. Since the air outlet 14b is arranged inside the second chamber 18, the test substance is detected inside the second chamber 18. To this end, the first detector 34 is used.

Moreover, the test substance, in the present example soot particles, is detected at a location associated with an air inlet 14a of the cabin air quality component 12. To this end, the second detector 40 is used.

In the present example, detecting the test substance comprises determining a mass distribution associated with the test substance. Both the first detector 34 and the second detector 40 determine masses of particles as a function of a particle diameter. In the present example, each of the first detector 34 and the second detector 40 determine masses of particles falling within one of a plurality of predefined ranges of diameters.

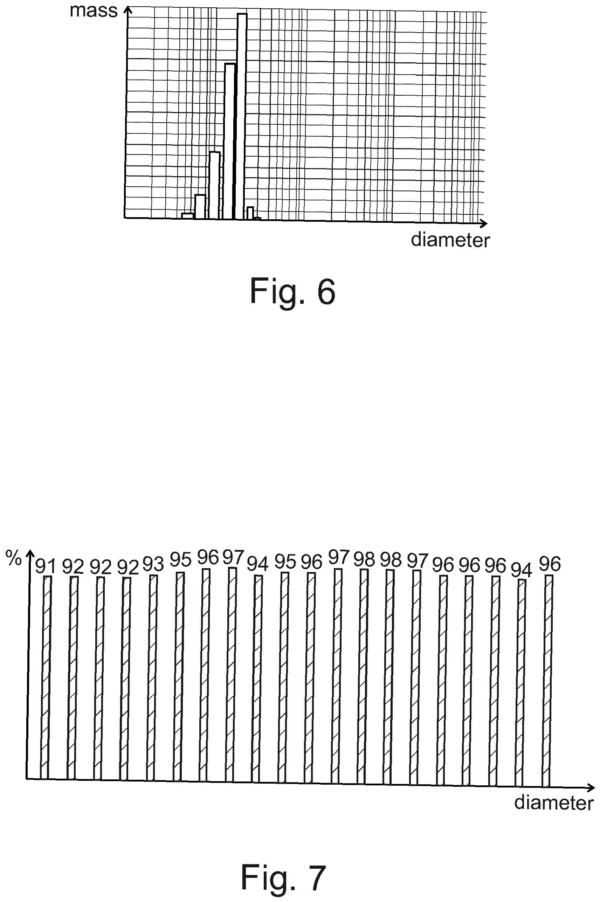

Thus, the mass distribution determined using the second detector 40 characterizes the mixture of test substance and carrier substance which enters the air inlet 14a. An example of such a mass distribution is shown in Figure 6. This mass distribution shows masses of particles (cf. vertical axis) as a function of a particle diameter (cf. horizontal axis).

The mass distribution determined using the first detector 34 characterizes the mixture of test substance and carrier substance which leaves the air outlet 14b.

The mass distributions determined using the first detector 34 and the second detector 40 may be compared. In an example, the masses detected by the second detector 40 may be subtracted from the masses detected by the first detector 34 or vice versa. This is done for every diameter of particles or for predefined intervals of diameters, e.g. from 10-14 nm, 15-37 nm etc. Consequently, an influence of the cabin air quality component 12 on the test substance may be assessed.

To this end, a removal efficiency of the cabin air quality component 12 is determined. The removal efficiency is determined as a ratio, e.g. expressed as a percentage, of particles supplied to the cabin air quality component 12 that have been withheld by the cabin air quality component 12. This may be determined by first calculating a percentage of particles that have been detected inside the second chamber 18, wherein the number of particles supplied to the cabin air quality component 12 is used as a basis. Subsequently, a difference of this percentage and 100% is determined. This is done as a function of a particle diameter or for predefined intervals of diameters, e.g. from 10-14 nm, 15-37 nm etc.

An example removal efficiency is shown in Figure 7. The removal efficiency (cf. vertical axis) in Figure 7 is provided as a function of particle diameters (cf. horizontal axis).

Figure 2 shows an assembly 10 for testing a cabin air quality component 12 of a vehicle in accordance with a second example.

In the following, only the differences with respect to the example of Figure 1 will be explained. Beyond that, reference is made to the above explanations.

In contrast to the example of Figure 1, in the example of Figure 2 only a portion of the cabin air quality component 12 is arranged in the second chamber 18.

Another portion of the cabin air quality component 12 is arranged in the first chamber 16.

More precisely, the wall 30 which again is a partition wall separating the first chamber 16 and the second chamber 18 comprises an opening 50 configured to receive the cabin air quality component 12. This means that an outer contour of the opening 50 substantially corresponds to an outer contour of the cabin air quality component 12. It is understood that an interface between the cabin air quality component 12 and a rim of the opening 50 is sealed in order not to allow the carrier substance and the test substance to pass between the cabin air quality component 12 and the wall 30. Put otherwise, the sealing ensures that the carrier substance and the test substance pass through the cabin air quality component 12.

As far as the execution of the method for testing a cabin air quality component 12 of a vehicle is concerned, reference is made to the explanations provided in connection with Figure 1.

Figure 3 shows an assembly 10 for testing a cabin air quality component 12 of a vehicle in accordance with a third example.

In the following, only the differences with respect to the previous examples will be explained. Beyond that, reference is made to the above explanations.

In the third example, the first chamber 16 has a different shape than in the first and second examples.

In the third example, the first chamber 16 is tube-shaped. This means that a length L of the first chamber 16 is very large as compared to a biggest diameter D of the first chamber.

In the present example, the first chamber has a substantially circular cross section C which has been turned into the drawing plane for better visibility.

In the example shown in Figure 3, the length L is 130 cm and the diameter D is 15 cm.

As far as the execution of the method for testing a cabin air quality component 12 of a vehicle is concerned, reference is made to the explanations provided in connection with Figure 1.

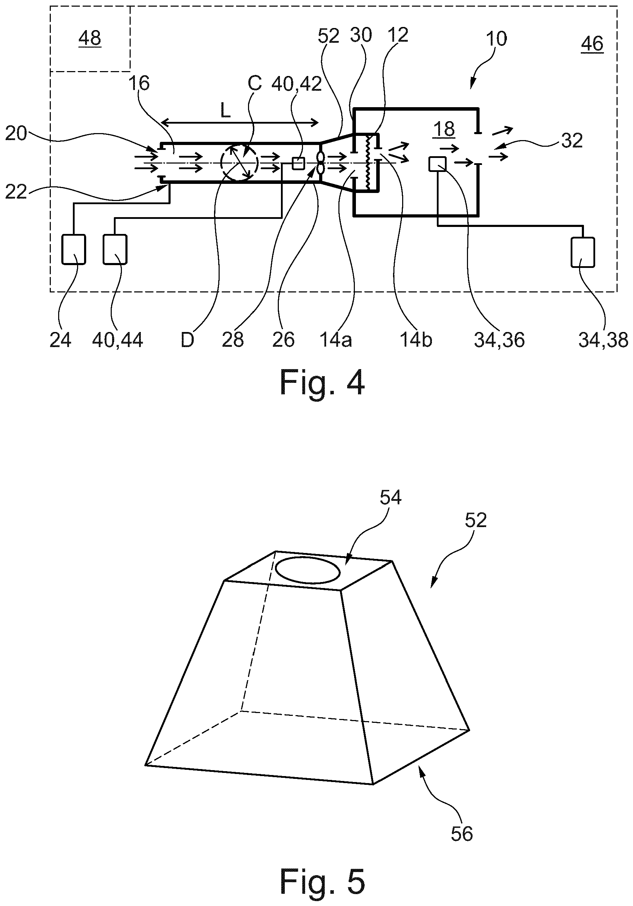

Figure 4 shows an assembly 10 for testing a cabin air quality component 12 of a vehicle in accordance with a fourth example.

Again, only the differences with respect to the previous examples will be explained. Beyond that, reference is made to the above explanations.

In the fourth example is a variant of the third example. The first chamber 16 used in the assembly 10 of the third example and the first chamber 16 used in the assembly 10 of the fourth example are the same.

However, in the fourth example, the assembly 10 additionally comprises an adaptor piece 52 which in the present example is shaped as a truncated pyramid or funnel (see also Figure 5).

The adaptor piece 52 comprises a first connection interface 54 connected to the outlet 26 of the first chamber 16 and a second connection interface 56 connected to the air inlet 14a of the cabin air quality component 12. Thus, the adaptor piece 52 fluidically connects the first chamber 16 to the air inlet 14a of the cabin air quality component 12.

Moreover, in the assembly 10 according to the fourth example, the mixing device 28 is located at the interface between the first chamber 16 and the adaptor piece 52.

As far as the execution of the method for testing a cabin air quality component 12 of a vehicle is concerned, reference is made to the explanations provided in connection with Figure 1.

It is noted that in all of the above examples, a blower may be used in order to actively move the mixture of carrier substance and test substance through the cabin air quality component 12. The blower may be fluidically connected to the first inlet 20 of the first chamber 16. In this case, the blower may push the mixture through the cabin air quality component 12. Alternatively, the blower may be fluidically connected to the outlet 32 of the second chamber 18. In this case, the blower may pull the mixture through the cabin air quality component 12. A combination of these alternatives is also possible, i.e. two blowers may be used wherein one blower is connected to the first inlet 20 of the first chamber 16 and another blower is connected to the outlet 32 of the second chamber 18.

Furthermore, in the above examples, only one particle generator has been used which is configured to generate soot particles. This has been done for the ease of explanation only. It is understood that more than one particle generators may be used. For example, a particle generator comprising a 2% sodium chloride (NaCl) solution for generating aerosol particles with diameters of 50 nm to 400 nm may be used in addition or as an alternative to the particle generator configured to provide soot particles. According to a further example, a particle generator configured to generate aerosol particles comprising Di-Ethyl-Hexyl-Sebacat (DEHS) and having a diameter of 100 nm to 2500 nm may be used. Such a particle generator may be used in addition to the particle generators mentioned before or as an alternative. Consequently, even though in the afore-mentioned examples the test substance is soot particles, the test substance may comprise at least one of a salt, a Di-Ethyl-Hexyl-Sebacat and soot.

According to a further example, the test substance provider 24 may comprise a gas supply. It is noted that the gas supply may be provided in addition to one or more particle generators or as an alternative thereto. The gas supply may be configured to supply one or more noxious gases such as nitrogen dioxide (NO2), carbon monoxide (CO), sulfur dioxide (SO2), ozone (O3), carbon dioxide (CO2), volatile organic compounds (VOCs) or any combination thereof.

It is noted that it is also possible to use a plurality of particle generators and a plurality of gas supplies in combination.

Moreover, it is understood that both the first detector and the second detector need to match the test substance. This means that in a case in which the test substance comprise more than one component, a plurality of first detectors and/or a plurality of second detectors may be used.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: assembly for testing a cabin air quality component of a vehicle
- 12: cabin air quality component
- 14a: air inlet
- 14b: air outlet
- 16: first chamber
- 18: second chamber
- 20: first inlet
- 22: second inlet
- 24: test substance provider
- 26: outlet
- 28: mixing device
- 30: wall
- 32: outlet of the second chamber
- 34: first detector
- 36: probe head of first detector
- 38: particle counter of first detector
- 40: second detector
- 42: probe head of second detector
- 44: particle counter of second detector
- 46: test chamber
- 48: air conditioning system
- 50: opening
- 52: adaptor piece
- 54: first connection interface
- 56: second connection interface

- C: cross section
- D: diameter
- L: length

## Claims

1. An assembly (10) for testing a cabin air quality component (12) of a vehicle, the assembly (10) comprising
a first chamber (16) fluidically connectable to an air inlet (14a) of the cabin air quality component (12), wherein the first chamber (16) comprises a first inlet (20) configured to receive a carrier substance and a second inlet (22),
a test substance provider (24) fluidically connected to the second inlet (22),
a mixing device (28) arranged inside the first chamber (16),
a second chamber (18) fluidically connectable to an air outlet (14b) of the cabin air quality component (12) and comprising a reception space configured for accommodating at least a portion of the cabin air quality component (12), wherein the second chamber (18) comprises an outlet (32) configured to dispense at least the carrier substance, and
a first detector (34) associated with the second chamber (18) and configured to detect the test substance.

2. The assembly (10) of claim 1, further comprising a second detector (40) associated with the first chamber (16) and configured to detect the test substance.

3. The assembly (10) of claim 1 or 2, wherein a length (L) of the first chamber (16) extending along a flow direction exceeds a biggest diameter (D) of the first chamber (16), wherein the diameter (D) is measured transverse to the flow direction.

4. The assembly (10) of claim 3, wherein the first chamber (16) is tube-shaped.

5. The assembly (10) of any one of the preceding claims, further comprising an adaptor piece (52) fluidically connected to the first chamber (16), such that the first chamber (16) is fluidically connectable to the air inlet (14a) of the cabin air quality component (12) via the adaptor piece (52).

6. The assembly (10) of claim 5, wherein the mixing device (28) is located at an end of the first chamber (16) adjacent to the adaptor piece (52) and/or at an end of the adaptor piece (52) adjacent to the first chamber (16).

7. The assembly (10) of any one of the preceding claims, wherein the test substance provider (24) comprises a particle generator and/or a gas supply.

8. The assembly (10) of any one of the preceding claims, wherein the first detector (34) comprises a gas sensor and/or a particle counter (38).

9. A method for testing a cabin air quality component (12) of a vehicle using an assembly (10) according to any one of the preceding claims, the method comprising
- providing a fluidic connection of an air inlet (14a) of the cabin air quality component (12) and a first chamber (16),
- providing a fluidic connection of an air outlet (14b) of the cabin air quality component (12) and a second chamber (18),
- providing at least a portion of the cabin air quality component (12) in the second chamber (18),
- supplying a mixture comprising a carrier substance and a test substance at the air inlet (14a) of the cabin air quality component (12) via the first chamber (16),
- detecting the test substance at a location associated with the air outlet (14b) of the cabin air quality component (12) and within the second chamber (18).

10. The method of claim 9, further comprising mixing the carrier substance and the test substance in the first chamber (16).

11. The method of claim 9 or 10, wherein the method is carried out in an environment having controllable temperature and controllable humidity.

12. The method of any one of claims 9 to 11, wherein the test substance comprises at least one of a salt, a Di-Ethyl-Hexyl-Sebacat and soot.

13. The method of any one of claims 9 to 12, wherein the mixture comprises a constant concentration of the test substance.

14. The method of any one of claims 9 to 13, wherein detecting the test substance comprises determining a mass distribution associated with the test substance.

15. The method of any one of claims 9 to 14, wherein detecting the test substance comprises determining a removal efficiency associated with the test substance.

## Amended claims

### Amended claims in accordance with Rule 137(2) EPC.

1. An assembly (10) for testing a cabin air quality component (12) of a vehicle, the assembly (10) comprising
a first chamber (16) fluidically connectable to an air inlet (14a) of the cabin air quality component (12), wherein the first chamber (16) comprises a first inlet (20) configured to receive a carrier substance and a second inlet (22),
a test substance provider (24) fluidically connected to the second inlet (22),
a mixing device (28) arranged inside the first chamber (16),
a second chamber (18) fluidically connectable to an air outlet (14b) of the cabin air quality component (12) and comprising a reception space configured for accommodating at least a portion of the cabin air quality component (12), wherein the second chamber (18) comprises an outlet (32) configured to dispense at least the carrier substance to an environment, and
a first detector (34) associated with the second chamber (18) and configured to detect the test substance.

2. The assembly (10) of claim 1, further comprising a second detector (40) associated with the first chamber (16) and configured to detect the test substance.

3. The assembly (10) of claim 1 or 2, wherein a length (L) of the first chamber (16) extending along a flow direction exceeds a biggest diameter (D) of the first chamber (16), wherein the diameter (D) is measured transverse to the flow direction.

4. The assembly (10) of claim 3, wherein the first chamber (16) is tube-shaped.

5. The assembly (10) of any one of the preceding claims, further comprising an adaptor piece (52) fluidically connected to the first chamber (16), such that the first chamber (16) is fluidically connectable to the air inlet (14a) of the cabin air quality component (12) via the adaptor piece (52).

6. The assembly (10) of claim 5, wherein the mixing device (28) is located at an end of the first chamber (16) adjacent to the adaptor piece (52) and/or at an end of the adaptor piece (52) adjacent to the first chamber (16).

7. The assembly (10) of any one of the preceding claims, wherein the test substance provider (24) comprises a particle generator and/or a gas supply.

8. The assembly (10) of any one of the preceding claims, wherein the first detector (34) comprises a gas sensor and/or a particle counter (38).

9. A method for testing a cabin air quality component (12) of a vehicle using an assembly (10) according to any one of the preceding claims, the method comprising
- providing a fluidic connection of an air inlet (14a) of the cabin air quality component (12) and a first chamber (16),
- providing a fluidic connection of an air outlet (14b) of the cabin air quality component (12) and a second chamber (18),
- providing at least a portion of the cabin air quality component (12) in the second chamber (18),
- supplying a mixture comprising a carrier substance and a test substance at the air inlet (14a) of the cabin air quality component (12) via the first chamber (16),
- detecting the test substance at a location associated with the air outlet (14b) of the cabin air quality component (12) and within the second chamber (18).

10. The method of claim 9, further comprising mixing the carrier substance and the test substance in the first chamber (16).

11. The method of claim 9 or 10, wherein the method is carried out in an environment having controllable temperature and controllable humidity.

12. The method of any one of claims 9 to 11, wherein the test substance comprises at least one of a salt, a Di-Ethyl-Hexyl-Sebacat and soot.

13. The method of any one of claims 9 to 12, wherein the mixture comprises a constant concentration of the test substance.

14. The method of any one of claims 9 to 13, wherein detecting the test substance comprises determining a mass distribution associated with the test substance.

15. The method of any one of claims 9 to 14, wherein detecting the test substance comprises determining a removal efficiency associated with the test substance.
